# FASCICULE DE BREVET EUROPEEN

(11) **EP 0 605 271 B1**
(45) Date de publication et mention de la délivrance du brevet: **23.09.1998**
(21) Numéro de dépôt: 93402950.5
(22) Date de dépôt: 07.12.1993
(51) Int. Cl.: F16L 33/207

(54) **Procédé de fixation, par sertissage, d'un tuyau souple sur un embout, appareillage pour sa mise en oeuvre et dispositifs ainsi obtenus**
Verfahren zum Befestigen eines Schlauches an einem Nippel durch eine Quetschverbindung und Gerät zur Durchführung des Verfahrens
Fixing a hose on a fitting by a crimping process and apparatus for performing the process

(30) Priorité: 28.12.1992 FR 9215765
(43) Date de publication de la demande: 06.07.1994
(73) Titulaire: HUTCHINSON, F-75008 Paris (FR)
(72) Inventeur: Dewitte, Jean-Marc, F-45200 Montargis (FR); Bidault, Jean-Claude, F-37270 Larsay (FR)
(74) Mandataire: Orès, Bernard

(56) Documents cités:
- WO-A-91/14894
- DE-A- 2 423 347
- DE-A- 3 914 645
- DE-U- 1 886 366
- FR-A- 970 958
- FR-A- 1 553 441
- US-A- 2 686 066

## Description

L'invention concerne un procédé de fixation, par sertissage, d'un tuyau souple sur un embout et les dispositifs ainsi obtenus.

De nombreux domaines industriels font appel, pour le transport de fluides, à des tuyaux ou canalisations souples rendus solidaires de tubes rigides par sertissage de douilles métalliques sur les tuyaux souples. Il en est ainsi, entre autres, dans le domaine de l'automobile où lesdites canalisations généralement désignées sous le nom de "flexibles" comprennent des douilles en aluminium serties sur des tuyaux en élastomère, armés ou non armés, dans le cas de transport de fluides en "basse pression", tandis que les flexibles "haute pression" comprennent des tuyaux en élastomère, armés ou non armés, rendus solidaires de tubes métalliques par des douilles serties en acier. Pour répondre aux exigences des constructeurs automobiles en matière de tenue à la corrosion des parties métalliques des équipements de véhicules, les douilles d'acier utilisées pour le sertissage des flexibles "haute pression" subissent un traitement de surface et/ou sont munies d'un revêtement particulier de protection, préalablement au sertissage. On constate cependant, après sertissage, que les mors formant les empreintes dans la douille d'acier détruisent partiellement le film ou revêtement protecteur de sorte qu'il apparaît ensuite des signes de corrosion lorsque de telles pièces sont soumises aux essais de résistance au brouillard salin.

On connait, par le document DE-A-2 423 347, un flexible haute pression comportant un tuyau souple fixé sur un embout rigide à surface extérieure ondulée au moyen d'une douille métallique sertie dont la surface interne comporte des anneaux en saillie correspondant aux creux des ondulations de la surface extérieure de l'embout et sur lesquels s'exercent les efforts de sertissage, et on connaît également, par le document FR-A-1 553 441, un tuyau souple à haute pression dont une extrémité est sertie sur un embout métallique au moyen d'une douille métallique, par exemple en aluminium, comportant plusieurs anneaux formés en saillie sur sa surface extérieure et sur lesquels s'applique l'effort de sertissage. Dans ces deux documents antérieurs, le sertissage des tuyaux souples sur les embouts rigides a lieu au moyen de douilles métalliques ayant des conformations spéciales qui augmentent leur coût.

Le problème se pose, par conséquent, de fournir un procédé et des dispositifs de fixation, par sertissage, d'un tuyau souple sur un tube ou un embout rigide qui pour des flexibles "haute pression" ne présentent pas, d'une part, les inconvénients rapportés ci-dessus des dispositifs à douilles d'acier et qui, d'autre part, soient moins onéreux que les réalisations connues précitées.

Etant donné que l'aluminium présente de bonnes caractéristiques de résistance à la corrosion, d'une part, et que l'on connaît, d'autre part, l'utilisation de douilles d'aluminium pour le sertissage dans le domaine des canalisations "basse pression", l'utilisation de ces douilles dans le domaine de haute pression pourrait aller de soi. Toutefois, si l'on applique purement et simplement les techniques de sertissage usuelles des douilles d'aluminium de flexibles "basse pression" pour la fabrication de raccords sertis, ou de flexibles "haute pression", on constate que les dispositifs obtenus ne satisfont pas aux conditions requises de résistance à l'arrachement des constituants du raccord l'un par rapport à l'autre, c'est-à-dire que le tube ou embout métallique peut être arraché du tuyau souple en exerçant un effort d'arrachement inférieur à celui fixé par les normes d'utilisation. Le problème posé ne peut donc pas être résolu par les techniques habituelles de sertissage et c'est un procédé nouveau qui a été élaboré par la Demanderesse pour obtenir les résultats souhaités, permettant ainsi, de façon surprenante, d'obtenir avec des douilles en aluminium, -c'est-à-dire avec un métal dont les caractéristiques mécaniques sont très différentes et inférieures à celles de l'acier-, les mêmes qualités de produit fini que celles des flexibles sertis à douilles d'acier.

L'invention propose donc un procédé de fixation d'un tuyau souple sur un tube ou un embout rigide par sertissage d'une douille pour réaliser un flexible haute pression ayant une pression de service de l'ordre de 100 bars ou davantage, le sertissage de la douille consistant à former dans cette douille deux séries d'empreintes de part et d'autre d'un bulbe de l'embout, caractérisé en ce que la douille est en aluminium et en ce que les empreintes sont formées dans la douille de telle façon que le fond de chaque empreinte est incliné par rapport à l'axe commun de la douille et de l'embout.

Dans un mode de réalisation préféré de l'invention, les fonds des empreintes de sertissage sont inclinés vers l'axe précité au voisinage du bulbe de l'embout, et cette inclinaison par rapport audit axe est comprise entre 2 et 5°.

L'invention propose également une canalisation flexible pour l'acheminement de fluide à haute pression, ayant une pression de service de l'ordre de 100 bars ou davantage, comprenant une douille sertie sur un tuyau souple emmanché sur un embout rigide à bulbe, la douille présentant deux séries d'empreintes de sertissage formées de part et d'autre du bulbe de l'embout, caractérisée en ce que la douille est en aluminium du type déformable par filage et présentant de bonnes caractéristiques de résistance mécanique et de résistance à la corrosion, les empreintes de sertissage étant réparties en deux couronnes distantes entre elles, le long de l'axe commun à l'embout et à la douille, d'une longueur qui est supérieure à la largeur du bulbe le long de l'axe, chacune desdites empreintes ayant de plus un fond incliné sur l'axe.

De préférence, les fonds desdites empreintes sont inclinées vers l'axe précité au voisinage du bulbe et leur inclinaison est comprise entre 2 et 5°.

L'invention sera bien comprise par la description qui suit, faite à titre d'exemple et en référence au dessin annexé dans lequel :
- la figure 1 est une vue en élévation, avec arrachement partiel, de la partie d'extrémité d'un tube ou embout rigide ;
- la figure 2 est une vue partie en coupe, partie en élévation, d'un flexible comportant un dispositif selon l'invention ;
- la figure 3 est une vue partielle, en coupe longitudinale, d'un mors de sertissage pour la mise en oeuvre du procédé selon l'invention ;
- la figure 4 en est une vue par bout.

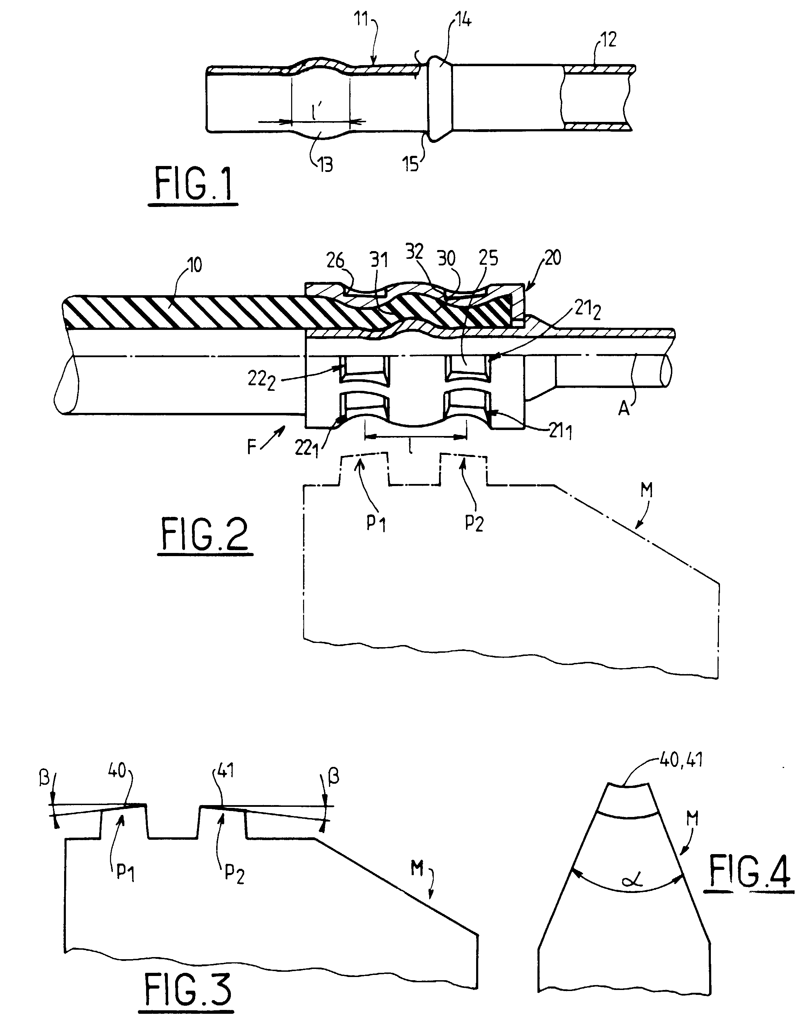

Un flexible F de transport de fluide, par exemple du type de ceux utilisés dans les mécanismes de direction assistée de véhicule automobile comprend un tuyau 10, qui peut être en un matériau du genre élastomère, armé ou non armé, revêtu le cas échéant d'une tresse textile externe, solidarisé de la partie d'extrémité 11, formant embout, d'un tube métallique rigide 12. Dans la forme de réalisation décrite et représentée l'embout 11 présente un bulbe 13 et une collerette 14 qui ménage, en regard du bulbe 13, un épaulement 15, figure 1. Le tuyau 10 et l'embout 11 sont solidarisés à l'aide d'une douille qui, après avoir été emmanchée sur le tuyau 10 et que l'ensemble ainsi constitué ait été rapporté sur l'embout 11, figure 2, est sertie à l'aide d'une presse de sertissage usuelle qui forme deux jeux d'empreintes circonférencielles sur ladite douille. Lorsque la canalisation ou flexible F est destinée à transporter un fluide à "haute pression", par exemple un liquide dont la pression de service est de l'ordre de 100 bars avec une pression d'éclatement qui peut être de l'ordre de 600 bars, la douille mise en oeuvre dans la technique connue est généralement une douille d'acier traitée pour présenter sur sa surface extérieure un film ou revêtement protecteur anticorrosion, -dont on constate cependant qu'il est partiellement détruit, après sertissage, avec, pour conséquence, l'apparition d'amorces de corrosion aux endroits ainsi dégarnis.

Pour pallier cet inconvénient, l'invention propose d'utiliser pour la douille 20 une douille d'aluminium qui, de ce fait, et contrairement aux douilles d'acier utilisées jusqu'à présent, résiste à la corrosion, le sertissage de la douille 20 étant cependant conduit d'une manière particulière afin que les flexibles F ainsi réalisés satisfassent avec succès aux essais d'éclatement, d'arrachement, de tenue en contraintes de pression cyclique, etc..., imposés par les constructeurs d'automobiles.

De façon plus précise, l'invention prévoit que les deux séries d'empreintes 21₁, 21₂, etc... et 22₁, 22₂, etc..., disposées suivant deux couronnes coaxiales à l'axe A commun au tuyau 10, à l'embout 11 et à la douille 20 déforment ladite douille et le tuyau souple 10 qui lui est sous-jacent d'une manière hétérogène dans la direction longitudinale de la douille, au droit desdites empreintes.

Dans un mode d'exécution préféré, chacune des empreintes 21 ou 22, -dont la forme générale est celle d'une cuvette-, présente un fond référencé 25 pour les empreintes 21 et 26 pour les empreintes 22, dont la surface est inclinée sur la direction de l'axe A, comme bien visible sur la figure 2, de sorte que la surface externe du fond de chaque empreinte peut être considérée comme un fragment de surface tronconique d'axe A.

Dans la forme de réalisation décrite et représentée, les surfaces externes des empreintes sont d'inclinaisons opposées par rapport à un plan moyen dirigé perpendiculairement audit axe A, l'inclinaison des surfaces tronconiques qui forment les fonds 25 et 26 des empreintes étant avantageusement comprise entre 2 et 5°, tandis que, comme visible sur la figure 2, les empreintes 21 et 22 sont distantes entre elles, -suivant la direction de l'axe A-, d'une longueur l qui est supérieure à la largeur l', -mesurée suivant la même direction-, du bulbe 13.

Lorsque le sertissage de la douille d'aluminium 20 est réalisé comme il vient d'être décrit, le tuyau 10 est déformé de manière hétérogène dans la direction longitudinale de la douille et au droit des empreintes, avec des rétreints dans les zones 30 et 31 qui sont celles comprises entre la surface latérale externe de l'embout 11, -sur les bords d'extrémité du bulbe 13-, et les parties comme 32, figure 2, des fonds d'empreinte 25 et 26 les plus proches de l'axe A.

Une légère déformation concomitante du tube 12 aux extrémités du bulbe 13, -par écrasement dudit tube sous les efforts de sertissage-, contribue à l'obtention d'un ancrage satisfaisant du tuyau 10 sur l'embout 11.

L'invention prévoit de faire application d'une douille 20 en un aluminium du type de ceux pouvant être déformés par filage et présentant de bonnes caractéristiques de résistance mécanique et de résistance à la corrosion.

Pour l'exécution du procédé, la presse de sertissage est équipée de mors M, figures 3 et 4, dont le nombre correspond au nombre des empreintes d'une couronne, par exemple huit dans la forme de réalisation décrite et représentée où l'angle au sommet α d'un mors M est de 45°, l'écartement des poinçons p₁, et p₂ étant choisi en correspondance de la largeur l' du bulbe 13, tandis que les faces opératoires 40 et 41 desdits poinçons, respectivement, sont inclinées à l'opposé les unes des autres sur l'axe A d'un angle β compris entre 2 et 5°.

### EXEMPLE.

Pour la fabrication d'un flexible comprenant un tuyau 10 en caoutchouc d'un diamètre externe d'environ 17,8 mm et d'un diamètre interne d'environ 9,8 mm rapporté sur un embout à bulbe d'une l'argeur l' d'environ 10 mm et d'un diamètre maximal d'environ 11,8 mm, pour un diamètre de la partie cylindrique externe du tube 12 de 10 mm, de bons résultats ont été obtenus en sertissant une douille d'aluminium d'une épaisseur de 2 mm, d'une longueur de 36 mm dont la tête de douille était percée d'un trou d'environ 12,3 mm pour un diamètre interne de 19 mm et un diamètre externe de 23 mm. L'outillage, mis en oeuvre pour réaliser deux séries de huit empreintes chacune, comportait des mors dont les faces opératoires des poinçons étaient inclinées de 2,5° sur l'axe A d'assemblage, le plus grand diamètre des faces opératoires des poinçons p₁ et p₂ étant de 17,3 et 17,5 mm, respectivement.

Lorsqu'un flexible ainsi réalisé est soumis aux essais de traction, il résiste à un effort d'arrachement de 532 daN pour une pression d'éclatement de 57,5 MPa.

## Revendications

1. Procédé de fixation d'un tuyau souple (10) sur un tube ou un embout rigide (11) par sertissage d'une douille (20) pour réaliser un flexible haute pression ayant une pression de service de l'ordre de 100 bars ou davantage, le sertissage de la douille (20) consistant à former dans cette douille deux séries d'empreintes (21, 22) de part et d'autre d'un bulbe (13) de l'embout (11), caractérisé en ce que la douille (20) est en aluminium et en ce que les empreintes (21, 22) sont formées dans la douille de telle façon que le fond (25, 26) de chaque empreinte est incliné par rapport à l'axe commun (A) de la douille (20) et de l'embout (11).

2. Procédé selon la revendication 1, caractérisé en ce que les fonds (25, 26) desdites empreintes sont inclinés vers l'axe (A) au voisinage du bulbe (13) de l'embout.

3. Procédé selon la revendication 2, caractérisé en ce que l'inclinaison des fonds (25, 26) des empreintes par rapport audit axe (A) est comprise entre 2 et 5°.

4. Canalisation flexible pour l'acheminement de fluide à haute pression, ayant une pression de service de l'ordre de 100 bars ou davantage, comprenant une douille (20) sertie sur un tuyau souple (10) emmanché sur un embout rigide (11) à bulbe (13), la douille (20) présentant deux séries d'empreintes de sertissage (21, 22) formées de part et d'autre du bulbe (13), caractérisée en ce que la douille (20) est en aluminium du type déformable par filage et présentant de bonnes caractéristiques de résistance mécanique et de résistance à la corrosion, les empreintes (21, 22) de sertissage étant réparties en deux couronnes distantes entre elles, le long de l'axe (A) commun à l'embout (11) et à la douille (20), d'une longueur (1) qui est supérieure à la largeur (1') du bulbe (13) le long de l'axe (A), chacune desdites empreintes ayant de plus un fond (25, 26) incliné sur l'axe (A).

5. Canalisation flexible selon la revendication 4, caractérisée en ce que les fonds (25, 26) des empreintes sont inclinés vers l'axe (A) au voisinage du bulbe (13).

6. Canalisation flexible selon la revendication 4 ou 5, caractérisée en ce que l'inclinaison des fonds (25, 26) des empreintes sur l'axe (A) est comprise entre 2 et 5°.

7. Canalisation flexible selon l'une des revendications 4 à 6, caractérisée en ce que chaque couronne d'empreintes de la douille (20) comprend 8 empreintes (21, 22).

## Patentansprüche

1. Verfahren zur Befestigung eines weichen Rohrs bzw. Schlauchs (10) auf einem Rohr bzw. Schlauch oder einem starren bzw. steifen Ansatz- bzw. Übergangsstück (11) durch Quetschverbindung einer Hülse (20) um eine flexible Hochdruckverbindung zu realisieren, die einen Betriebsdruck in der Größenordnung von 100 bar oder mehr hat, wobei die Quetschverbindung der Hülse (20) darin besteht, daß man in dieser Hülse zwei Reihen von Eindrücken bzw. -prägungen (21, 22) beiderseits einer Wulst bzw. Ausbauchung (13) des Ansatzbzw. Übergangsstücks (11) ausbildet, dadurch **gekennzeichnet**, daß die Hülse (20) aus Aluminium ist und daß die Eindrücke bzw. -prägungen (21, 22) in der Hülse in der Art und Weise ausgebildet werden, daß der Boden (25, 26) von jedem Eindruck bzw. jeder Einprägung mit Bezug auf die gemeinsame Achse (A) der Hülse (20) und des Ansatz- bzw. Übergangsstücks (11) geneigt ist.

2. Verfahren gemäß Anspruch 1, dadurch **gekennzeichnet,** daß die Böden (25, 26) der Eindrücke bzw. -prägungen nach der Achse (A) in der Nähe der Wulst bzw. Ausbauchung (13) des Ansatz- bzw. Übergangsstücks geneigt sind.

3. Verfahren gemäß Anspruch 2, dadurch **gekennzeichnet,** daß die Neigung der Böden (25, 26) der Eindrücke bzw. -prägungen mit Bezug auf die genannte Achse (A) zwischen 2 und 5° liegt.

4. Flexible Leitung für die Beförderung von Fluid mit hohem Druck, die einen Betriebsdruck in der Größenordnung von 100 bar oder mehr hat, umfassend eine Hülse (20), welche auf ein weiches Rohr bzw. einen weichen Schlauch (10) gequetscht ist, das bzw. der auf ein starres bzw. steifes Ansatz- bzw. Übergangsstück (11) mit Wulst bzw. Ausbauchung (13) aufgesteckt ist, wobei die Hülse (20) zwei Reihen von Quetschungseindrükken bzw. -einprägungen (21, 22) aufweist, die beiderseits der Wulst bzw. Ausbauchung (13) ausgebildet sind, dadurch **gekennzeichnet,** daß die Hülse (20) aus Aluminium der Art ist, welches durch Fließformen bzw. -pressen deformierbar ist und gute Eigenschaften mechanischen Widerstands und Widerstands gegen Korrosion aufweist, wobei die Quetscheindrücke bzw. -prägungen (21, 22) in zwei Kränzen bzw. Kreisringen verteilt sind, die untereinander längs der gemeinsamen Achse (A) des Ansatz- bzw. Übergangsstücks (11) und der Hülse (20) um eine Länge (1) beabstandet sind, die größer als die Breite (1') der Wulst bzw. Ausbauchung (13) längs der Achse (A) ist, wobei jeder der Eindrücke bzw. jede der Einprägungen außerdem einen Boden (25, 26) hat, der zu der Achse (A) geneigt ist.

5. Flexible Leitung gemäß Anspruch 4, dadurch **gekennzeichnet,** daß die Böden (25, 26) der Eindrücke bzw. -prägungen in der Nähe der Wulst bzw. Ausbauchung (13) nach der Achse (A) geneigt sind.

6. Flexible Leitung gemäß Anspruch 4 oder 5, dadurch **gekennzeichnet,**daß die Neigung der Böden (25, 26) der Eindrücke bzw. -prägungen zu der Achse (A) zwischen 2 und 5° liegt.

7. Flexible Leitung gemäß einem der Ansprüche 4 bis 6, dadurch **gekennzeichnet,** daß jeder Kranz bzw. Kreisring der Eindrücke bzw. -prägungen der Hülse (20) acht Eindrücke bzw. -prägungen (21, 22) enthält.

## Claims

1. A method of fixing a flexible pipe (10) on a rigid tube or socket (11) by crimping of a sleeve (20) in order to produce a high pressure flexible joint with a working pressure of around 100 bars or more, the crimping of the sleeve (20) consisting of forming in this socket two series of impressions (21, 22) on either side of a bulb (13) of the socket (11), characterised in that the sleeve (20) is of aluminium and in that the bottom (25, 26) of each impression is inclined in relation to the common axis (A) of the sleeve (20) and of the socket (11).

2. A method according to Claim 1, characterised in that the bottoms (25, 26) of the said impressions are inclined towards the axis (A) in the vicinity of the bulb (13) of the socket.

3. A method according to Claim 2, characterised in that the inclination of the bottoms (25, 26) of the impressions in relation to the axis (A) is comprised between 2 and 5°.

4. A flexible duct for the conveyance of high pressure fluid at a working pressure of around 100 bars or more, comprising a sleeve (20) crimped onto a flexible pipe (10) fitted onto a rigid socket (11) having a bulb (13), the sleeve (20) having two series of crimping impressions (21, 22) formed on either side of the bulb (13), characterised in that the sleeve (20) is of aluminium of the type which can be deformed by extrusion and having good characteristics of mechanical strength and resistance to corrosion, the crimping impressions (21, 22) being distributed over two rings which are spaced apart from each other, along the axis (A) common to the socket (11) and to the sleeve (20), of a length (1) which is greater than the width (1') of the bulb (13) along the axis (A), each of the said impressions having furthermore a bottom (25, 26) which is inclined to the axis (A).

5. A flexible duct according to Claim 4, characterised in that the bottoms (25, 26) of the impressions are inclined towards the axis (A) in the vicinity of the bulb (13).

6. A flexible duct according to Claim 4 or 5, characterised in that the inclination of the bottoms (25, 26) of the impressions to the axis (A) is comprised between 2 and 5°.

7. A flexible duct according to one of Claims 4 to 6, characterised in that each ring of impressions on the sleeve (20) comprises eight impressions (21, 22).
